# EUROPÄISCHE PATENTANMELDUNG

(11) **EP 2 299 341 A1**
(43) Veröffentlichungstag der Anmeldung: **23.03.2011**
(21) Anmeldenummer: 09011932.2
(22) Anmeldetag: 18.09.2009
(51) Int. Cl.: G05B 19/042

(54) **Editiergerät und Verfahren zur Konfigurierung von Parametern einer industriellen Automatisierungsanordnung**

(71) Anmelder: SIEMENS AKTIENGESELLSCHAFT, 80333 München (DE)
(72) Erfinder: Dong, Yi, 90491 Nürnberg (DE); Munoz Ibarra, Pablo, 91058 Erlangen (DE)

(57) **Zusammenfassung**

Die Erfindung betrifft ein Editiergerät zur Konfigurierung von Parametern (P) für Funktionsblöcke (FB) einer industriellen Automatisierungsanordnung, wobei für die Funktionsblöcke (FB) jeweils eine Mehrzahl Parameter konfigurierbar ist. Dabei ist ein erster Rahmen (R1) zur direkten Eingabe oder Änderung mehrerer oder aller Parameter eines ausgewählten der Funktionsblöcke (FB) vorgesehen, wobei ein zweiter Rahmen (R2) mit einer weiteren Darstellung der Parameter (P1) vorgesehen ist, wobei zumindest ein Parameter auswählbar ist und wobei das Editiergerät zu einer den Benutzer führenden Konfiguration dieses zumindest eines Parameters oder der Parameter dieser Kategorie eingerichtet ist, wobei dass das Editiergerät zur wahlfreien wechselweisen Verwendung des ersten und des zweiten Rahmens eingerichtet ist. Dabei ist das Editiergerät zur wiederholten Konsistenz-Prüfung der Parameter und zur zu kontinuierlichen Kennzeichnung von konsistenten und nicht-konsistenten der Parameter eingerichtet.

## Beschreibung

Die Erfindung betrifft ein Editiergerät zur Konfigurierung von Parametern für Funktionsblöcke einer industriellen Automatisierungsanordnung gemäß dem Oberbegriff des Patentanspruchs 1, und ein Verfahren für ein Editiergerät gemäß dem Oberbegriff des Patentanspruchs 8.

Bei der Erstellung oder Änderung einer industriellen Automatisierungsanordnung stellt die Programmierung der verwendeten Automatisierungskomponenten, beispielsweise der Controller, meist einen entscheidenden und sehr arbeitsintensiven Schritt dar. Zur Vereinfachung der Programmierung sind verschiedene Hilfsmittel bekannt, in erster Linie sogenannte "Editiergeräte" (auch "Editoren" genannt), bei denen mit Hilfe einer grafischen Benutzeroberfläche die für eine spätere Programmerstellung ("Compilierung") benötigten Informationen eingegeben werden können. Dabei ist es üblich, mit sog. "Funktionsblöcken" zu arbeiten, welche eine logische Funktionalität repräsentieren und die mittels Verbindungen (z.B. Linien) miteinander verbunden werden. Die Verbindungen visualisieren dabei einen Informations- oder Datenfluss, kurz: "Signale".

Viele dieser in sog. "Bibliotheken" verfügbaren Funktionsblöcke funktionieren erst dann zufriedenstellend, wenn sie situationsbezogen mit passenden Parametern konfiguriert sind. Das bedeutet, dass bei der Programmierung einer Automatisierungsanordnung durch den Programmierer oder Benutzer verschiedene Variablen und Konstanten der Funktionsblöcke parametrisiert und andere Einstellungen vorgenommen werden müssen. Dabei müssen nicht nur die Parameter eines einzelnen Funktionsblocks "in sich" konsistent sein, sondern auch auf die Parameter anderer Funktionsblöcke abgestimmt sein. So muss beispielsweise in den Fällen, in denen der Ausgang eines ersten Funktionsblocks mit dem Eingang eines zweiten Funktionsblocks verknüpft ist, die "Kompatibilität" der beiden Schnittstellen gewährleistet sein, was bedeutet, dass beispielsweise kein digitaler Ausgang auf einen analogen Eingang geschaltet werden sollte, und umgekehrt.

Je nach Funktionalität eines Funktionsblocks stellt die Konfigurierung desselben oft eine komplexe Aufgabe dar, weil in manchen Fällen hunderte verschiedener Parameter konfiguriert werden müssen, welche wie erwähnt zusätzlich oft noch in Abhängigkeit von Parametern anderer Funktionsblöcke stehen. Aus diesem Grund sind in vielen Bereichen der Datenverarbeitung "Assistent" genannte Hilfsprogramme üblich; diese werden oft auch als "Wizard" bezeichnet. Ein solcher "Wizard" führt auf Anforderung einen modalen Dialog mit dem Benutzer aus, wobei, meist begleitet durch Hilfsinformationen, von dem Benutzer alle notwendigen Informationen abgefragt werden. Ein solcher "Wizard" ist idealer Weise so aufgebaut, dass auch weniger geübte Benutzer derart durch eine feste Abfolge von Dialogschritten geführt werden, dass eine eingestellte Aufgabe erfolgreich abgeschlossen werden kann. Die Verwendung eines solchen "Wizards" bringt jedoch auch Nateile mit sich. Dadurch, dass ein solcher "Wizard" einen modalen Dialog darstellt, ist es einem Benutzer nicht möglich, in derselben Anwendung gleichzeitig weitere Informationen außerhalb dieses Dialogs abzurufen. Ein Unterbrechen des Dialogs führt dabei dazu, dass die bislang gemachten Eingaben verworfen werden. Außerdem haben die bekannten "Wizards" den Nachteil, dass der Benutzer an eine bestimmte Dialogreihenfolge gebunden ist. Ein Benutzer, welcher nur an wenigen Stellen einer Konfigurierung Hilfe benötigt, muss entweder den vollständigen Dialog des "Wizards" durchlaufen, was unnötige umständlich und zeitraubend sein kann, oder aber alle erforderlichen Parameter ohne die Hilfe einer Benutzerführung direkt in Eingabemasken eingeben. Dies führt dazu, dass geübte Benutzer häufig vollständig auf die Benutzung von "Wizards" verzichten, und dabei in Kauf nehmen, dass sie bei Unsicherheiten bezüglich einiger weniger Parameter auf die Benutzerführung und damit auch die Hilfe des "Wizards" verzichten müssen. Kurz gesagt, erkauft man sich die Benutzerführung eines "Wizards" dadurch, dass ein Benutzer in seiner Flexibilität eingeschränkt und auf eine feste Abfolge von Bearbeitungs- und Eingabeschritten festgelegt wird.

Eine zweite Möglichkeit, die heute sehr oft für die Parametrierung der Bausteine verwendet wird, ist die Verwendung einer Eigenschaftstabelle oder eines Eigenschaftsdialogs. Dort werden alle möglichen Parameter tabellarisch oder in Form von Masken dargestellt, und der Anwender kann dort seine Parametrierung vornehmen. Ein Nachteil dabei ist die fehlende Führung des Anwenders.

Es ist daher eine Aufgabe des erfindungsgemäßen Editiergerätes und des erfindungsgemäßen Verfahrens, eine Benutzerführung mit einer verbesserten Nutzbarkeit, insbesondere für die Konfigurierung und Parametrisierung von Funktionsblöcken, vorzuschlagen. Einschränkungen in der Flexibilität, die ein modaler Dialog mit sich bringt, sollen vermieden werden.

Es ist dabei ein zentraler Gedanke der erfindungsgemäßen Lösung, einen Benutzer ohne modalen Dialog durch die für die Konfigurierung erforderlichen Schritte in einer fallweise von dem Benutzer bestimmten Reihenfolge zu leiten. Hierfür wird eine Lösung vorgeschlagen, die eine Kombination aus dem "Wizards-" und aus dem "Eigenschaften-Konzept" darstellt. Die Lösung bietet die Vorteile der Wizards ohne deren unerwünschte "Modalität", und die Vorteile der Eigenschaftsfenster, wobei dem Anwender, getrennt von einer Liste aller Eigenschaften, nur die essentiellen Parameter (Teilmenge der Eigenschaftsliste) und deren Konsistenzstatus (z.B. korrekt/konsistent, ausgefüllt oder nicht, optional) in einer geführten, aber nicht-modalen Umgebung präsentiert werden. Dazu wird ein Navigations-Teil oder ein Navigations-Rahmen vorgeschlagen, der eine Reihenfolge von Konfigurierungsschritten vorschlägt. Diese Schritte sind für die Funktionsblöcke jeweils vordefiniert und somit Bestandteil einer Bibliothek. Erfindungsgemäß kann ein Benutzer wahlweise und wechselweise Parameter direkt eingeben, oder aber mittels der Benutzerführung, die über den Navigations-Teil verfügbar ist. Eine fortwährende Konsistenzprüfung kennzeichnet dabei diejenigen Parameter, die der Benutzer noch bearbeiten sollte.

Die Aufgabe wird insbesondere durch ein Editiergerät gemäß dem Patentanspruch 1 und durch ein Verfahren für ein Editiergerät gemäß dem Patentanspruch 8 gelöst.

Die Lösung der Aufgabe sieht dabei ein Editiergerät zur Konfigurierung von Parametern für Funktionsblöcke einer industriellen Automatisierungsanordnung vor, wobei für eine Mehrzahl der Funktionsblöcke jeweils eine Mehrzahl Parameter konfigurierbar ist, und wobei zur Konfigurierung eine grafische Benutzeroberfläche vorgesehen ist. Dabei ist ein erster Bereich, vorzugsweise ein Rahmen, der grafischen Benutzeroberfläche zur direkten Eingabe oder Änderung mehrerer oder aller Parameter eines ausgewählten der Funktionsblöcke vorgesehen und ein zweiter Bereich, vorzugsweise Rahmen, der grafischen Benutzeroberfläche ist zu einer weiteren Darstellung der Parameter vorgesehen, wobei zumindest ein Parameter oder eine Parameter-Kategorie aus dieser Darstellung auswählbar ist und wobei das Editiergerät zur einer den Benutzer führenden Konfiguration dieses zumindest eines Parameters oder der Parameter dieser Kategorie eingerichtet ist. Weiter ist das Editiergerät zur wahlfreien wechselweisen Verwendung des ersten und des zweiten Bereiche bzw. Rahmen eingerichtet, wobei beim Wechsel zwischen dem ersten und dem zweiten Bereich oder Rahmen vorzugsweise jeweils eine Sicherung der bislang eingegebenen Parameter vorgenommen wird, und schließlich ist das Editiergerät zur wiederholten Konsistenz-Prüfung der Parameter und zur zu kontinuierlichen Kennzeichnung von konsistenten und nicht-konsistenten der Parameter eingerichtet. Durch ein solches Editiergerät kann ein Benutzer eine Konfigurierung jederzeit unterbrechen und später fortsetzen, ohne zwischenzeitlich Informationen zu verlieren (keine "Modalität"). Dabei wird einem Benutzer zwar eine Reihenfolge für die Konfigurierung des Funktionsblockes vorgeschlagen, dennoch hat der Benutzer die Möglichkeit, die für die Konfigurierung notwendigen Schritte in einer selbst festgelegten Reihenfolge zu durchlaufen oder auch einzelne Parameter direkt zu bearbeiten. Die Kennzeichnung von konsistenten bzw. nicht-konsistenten Parametern gibt dabei zusätzlich eine Übersicht über noch zu durchlaufende Konfigurierungsschritte.

Die Erfindung wird weiterhin durch ein Verfahren für ein Editiergerät zur Konfigurierung von Parametern von Funktionsblöcken einer industriellen Automatisierungsanordnung gelöst, wobei mittels einer grafischen Benutzeroberfläche zumindest zwei getrennte Bereiche oder separierte Rahmen zur Konfigurierung der Parameter eines ausgewählten der Funktionsblöcke angezeigt werden, wobei in einem ersten der Bereiche oder Rahmen eine direkte Eingabemöglichkeit für eine Mehrzahl oder alle Parameter des ausgewählten der Funktionsblöcke angeboten wird, und in einem zweiten der Rahmen der grafischen Benutzeroberfläche eine einen Benutzer führende Eingabemöglichkeit für zumindest einen der Parameter angeboten wird, wobei dem Benutzer ein wahlfreier Wechsel zwischen den beiden Eingabemodi (Bereiche oder Rahmen) angeboten wird, wobei zumindest nach jeder Konfiguration eines der Parameter einer Konsistenzüberprüfung der Parameter vorgenommen wird, und wobei inkonsistente Parameter gekennzeichnet werden. Mittels einer solchen Vorgehensweise wird die mangelnde Flexibilität eines modalen Dialogs vermieden, ohne dass der Benutzer auf eine Benutzerführung verzichten muss. Dabei ist es kennzeichnend für einen modalen Dialog, dass ein Benutzer nicht gleichzeitig in anderen Fenstern oder Rahmen derselben Anwendung weiter arbeiten kann. Durch die Umgehung eines modalen Dialogs wird dem Benutzer nunmehr die Möglichkeit eröffnet, während der Konfigurierung eines Parameters aus anderen Teilen der Anwendung, beispielsweise einer Online-Hilfe, weitere Informationen heran zu ziehen.

Vorteilhafte Ausgestaltungen des erfindungsgemäßen Editiergerätes sind in den abhängigen Patentansprüchen angegeben. Die dabei beschriebenen Merkmale und Vorteile gelten sinngemäß auch für das erfindungsgemäße Verfahren.

Eine Übersichtliche Arbeitsweise wird gewährleistet, wenn in dem zweiten Rahmen der Zugriff auf die Parameter anhand einer Baumstruktur erfolgt. Dadurch können die Parameter in geeigneter Weise gruppiert werden, insbesondere derart, dass optional zu bearbeitende Parameter und zwingend zu bearbeitende Parameter (sog. "Must"-Parameter) separiert werden. Im Rahmen der Kennzeichnung von konsistenten und nicht-konsistenten Parametern können einzelne Zweige der Baumstruktur vorteilhaft mit drei verschiedenen Stati visuell markiert werden, beispielsweise durch einen grünen Haken o.ä. für konsistente Parameter, beispielsweise durch ein Ausrufezeichen oder rote Farbe für nicht-konsistente Parameter, und schließlich beispielsweise durch eine graue Hinterlegung für optionale oder bereits systemseitig vorkonfigurierte Parameter.

Vorteilhaft ist das Editiergerät derart eingerichtet, dass bereits konfigurierte der Parameter eines Funktionsblocks, der noch nicht vollständig oder noch nicht konsistent konfiguriert ist, beim Wechsel zu einem anderen der Funktionsblöcke jeweils gespeichert werden. Gleiches gilt für einen Wechsel der Bearbeitung innerhalb der Baumstruktur. Dadurch ist gewährleistet, dass im Gegensatz zu einem modalen Dialog eine Unterbrechung der Arbeit an den Parametern eines Funktionsblocks oder eines Teils der Baumstruktur keine Daten verloren gehen.

Idealer Weise wird ständig (fortwährend) eine Konsistenzprüfung der Parameter vorgenommen, so dass möglichst zeitnah und somit stets aktuell eine Übersicht über diejenigen Parameter bzw. Parameter-Kategorien besteht, in denen Handlungsbedarf besteht. Vorteilhaft wird eine solche wiederholte Konsistenz-Prüfung zumindest nach jeder Eingabe oder nach jeder Änderung eines der Parameter durchgeführt. Da dies insbesondere bei weniger leistungsfähigen Computern, die zur Konfigurierung großer Projekte eingesetzt werden, zur Arbeitsverzögerung führen kann, wird insbesondere bei Funktionsblöcken und bei Programmier-Projekten mit einer hohen Anzahl von Parametern vorgeschlagen, eine solche Konsistenz-Prüfung nur in Arbeitspausen oder auf Anforderung des Benutzers durchzuführen; dazu kann beispielsweise eine Schaltfläche auf der grafischen Benutzeroberfläche vorgesehen werden.

Ausführungsbeispiele der für ein erfindungsgemäßes Editiergerät werden nachfolgend anhand der Zeichnungen beschrieben. Sie dienen gleichzeitig der Erläuterung eines erfindungsgemäβen Verfahrens.

Dabei zeigen:
- Figur 1: ein Beispiel für eine grafische Benutzeroberfläche eines erfindungsgemäßen Editiergerätes mit einem als "inkonsistent" gekennzeichneten Parameter, und
- Figur 2: die grafische Benutzeroberfläche in einem "konsi- stenten" Zustand nach der Ergänzung eines Wertes für den Parameter.

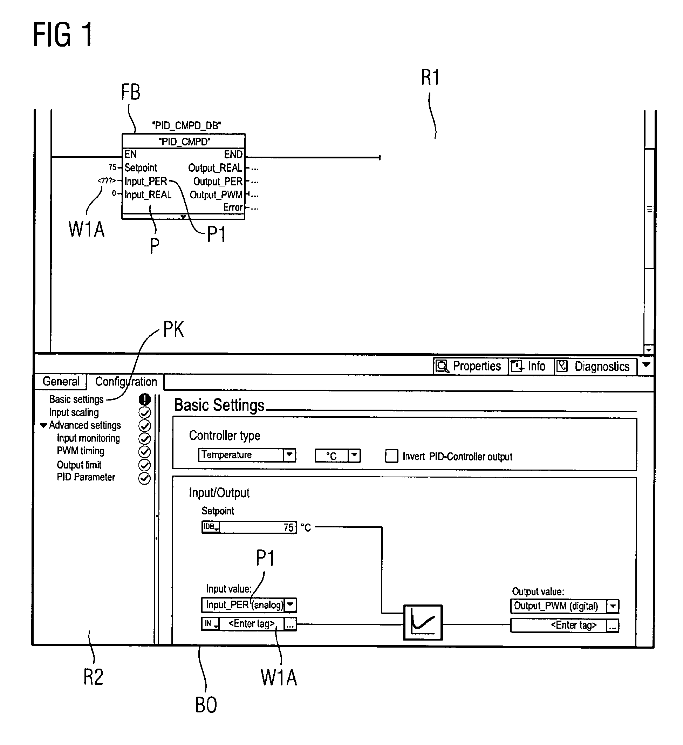

Im Folgenden soll im Rahmen eines Ausführungsbeispiels die Konfigurierung eines Parameters bzw. des Wertes dieses Parameters für einen Funktionsblock einer industriellen Automatisierungsanordnung dargestellt werden. Bei diesem Funktionsblock handelt es sich um einen Temperaturregler PID-Regler. In der Figur 1 ist dabei die grafische Benutzeroberfläche BO eines erfindungsgemäßen Editiergerätes dargestellt, wobei die grafische Benutzeroberfläche BO in zwei Rahmen R1, R2 unterteilt ist. Dabei sind auch Ausgestaltungen der Erfindung mit einer anderen optischen Aufteilung, insbesondere mit einer anderen Anzahl verwendeter Rahmen, denkbar.

In dem Rahmen R1 (in der Figur 1 oben dargestellt) ist der Funktionsblock FB dargestellt, wobei sich die Darstellung in der vorliegenden Sicht auf den Namen "PID_CMPD" und eine Parameterliste P mit (in diesem Ausführungsbeispiel) neun Parametern beschränkt. Dabei ist der Rahmen R1 derart ausgestaltet, dass Werte (Argumente) der Parameter P jeweils direkt eingegeben werden können, indem mit einem Mouse-Cursor direkt in entsprechende Eingabefelder, die den einzelnen der Parameter P zugeordnet sind, hineingeklickt werden kann.

Im vorliegenden Ausführungsbeispiel wird davon ausgegangen, dass eine vorangegangene Konsistenzprüfung des Editiergerätes festgestellt hat, dass die Eingangsvariable Input_PER mit keinem Ausgang eines anderen (nicht dargestellten) Funktionsblocks verknüpft ist; dies bedeutet, dass dem Parameter P1, der diese Eingangsvariable bezeichnet, keine systemweit vorhandene Variable für einen Ausgangswert eines anderen Funktionsblocks (beispielsweise eines Sensors) zugeordnet ist. Daher ist im Rahmen R1 zu dem Parameter P1 als vorläufiger Wert W1A die Zeichenfolge "???" zugeordnet; weiter ist diese Zeichenfolge "???" in roter Farbe dargestellt.

Die Benutzeroberfläche BO weist erfindungsgemäß einen weiteren Rahmen R2 auf, der wiederum in einen "Navigationsteil" im linken Teil des Rahmens R2 und in einen Arbeitsbereich im rechten Teil des Rahmens R2 strukturiert ist. Im "Navigationsbereich" im linken Teil des Rahmens R2 ist eine Baumstruktur zu sehen, in welcher die Parameter P in verschiedenen Zweigen der Baumstruktur zugreifbar sind; der hier betrachtete Parameter P1 ist dabei in einer Parameter-Kategorie PK mit der Bezeichnung "Basic Settings" angeordnet. Aufgrund der Tatsache, dass dem Parameter P1 erst ein nicht-konsistenter, vorläufiger Wert Wla zugeordnet ist, ist die Parameter-Kategorie PK mit diesem Parameter P1 in der Baumstruktur mit einem (roten) Ausrufezeichen markiert, womit auf die Nicht-Konsistenz zumindest eines Parameters P1 dieser Parameter-Kategorie PK hingewiesen wird. Alle anderen Kategorien dieser Baumstruktur konnten bislang noch nicht hinsichtlich ihrer Konsistenz überprüft werden; aus diesem Grund sind die dort vorhandenen Kennzeichnungen "ausgegraut", d.h., dass noch keine abschließende Aussage hinsichtlich der Konsistenz von Parametern in diesen Kategorien getroffen werden konnte.

Im rechten Teil des Rahmens R2 wird einem Benutzer eine Hilfestellung hinsichtlich der Parametrisierung der Parameter aus der Parameter-Kategorie PK, welche zurzeit ausgewählt ist, gegeben. Dabei stellen die im rechten und im linken Teil des Rahmens R2 gegebenen Informationen die Benutzerführung für einen Benutzer dar, wobei in der Baumstruktur die zu bearbeitenden Parameter-Kategorien PK und im (hier: rechten) Arbeitsbereich die in der jeweiligen Parameter-Kategorie PK zugänglichen Parameter, deren (derzeitigen) Werte und weitere Informationen verfügbar sind. Analog zu der Darstellung der Parameter P im Rahmen R1 ist auch im Rahmen R2 der Parameter P1 und dessen (vorläufiger) Wert Wla dargestellt, wobei hier jedoch anstelle der verkürzten Darstellung "???" im Eingabefeld als Hilfestellung die Aufforderung "enter tag" dargestellt wird. Auch diese Aufforderung ist vorteilhaft mit der Farbe rot gekennzeichnet. In der Figur 1 sind weitere Parameter und deren (vorläufige oder fehlende) Werte dargestellt, auf die im Rahmen dieser Erläuterung jedoch nicht weiter eingegangen werden soll.

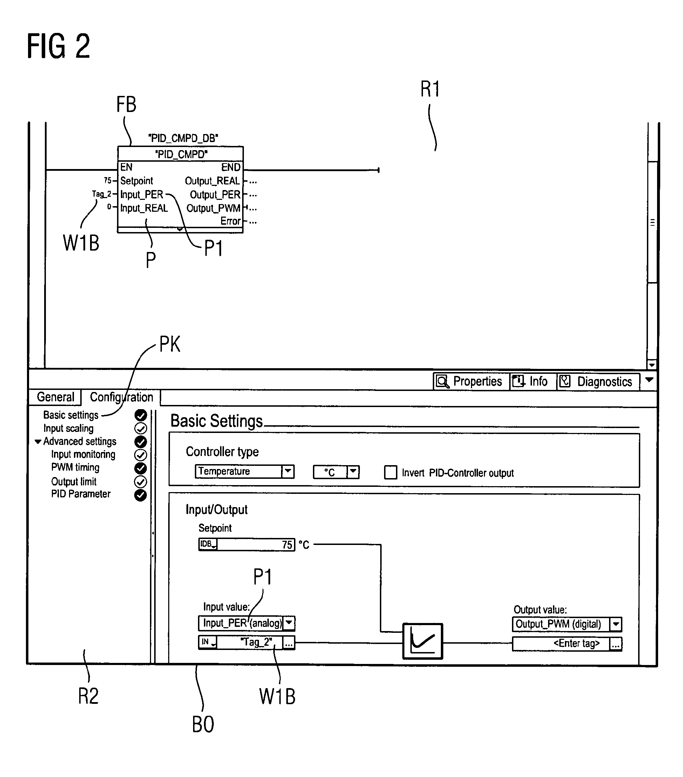

In der Figur 2 ist nun das Resultat einer Eingabe eines Wertes W1B für den Parameter P1 zu sehen. Der eingegebene Wert W1B ist sowohl im Rahmen R1 als auch im Rahmen R2 dargestellt. Da nun das Fehlen eines Wertes für den Parameter P1 nicht mehr als Grund für eine Inkonsistenz gesehen werden kann, ist in der Baumstruktur des Rahmens R2 die Parameter-Kategorie PK nunmehr mit einem (grünen) Häkchen versehen, was bedeutet, dass in dieser Parameter-Kategorie PK keine weiteren "inkonsistenten" Parameter vorliegen. Dadurch konnten auch andere Parameter-Kategorien hinsichtlich ihrer Konsistenz überprüft werden, wodurch auch in diesen Parameter-Kategorien entsprechende Kennzeichen im Rahmen R2 visualisiert werden.

Durch das Bewegen einer Computer-Mouse oder anderer Eingabemittel ist es einem Benutzer jederzeit möglich, zwischen einer Arbeit in dem Rahmen R1 und dem Rahmen R2 zu wechseln.

Jeweils getätigte Eingaben werden dabei gespeichert, selbst dann, wenn zwischenzeitlich ein anderer Funktionsblock FB bearbeitet wird oder das Editiergerät zwischenzeitlich mit einem anderen Projekt verwendet wird, o.ä.. Im linken Teil des Rahmens R2 wird einem Benutzer zwar eine Bearbeitungs-Reihenfolge für die Konfigurierung von Parametern o.ä. vorgeschlagen; dies ist jedoch nur ein Vorschlag, dem nicht gefolgt werden muss. Ein Benutzer kann jederzeit zwischen einer direkten Parametereingabe, vorzugsweise im Rahmen R1, und einer Benutzerführung im Rahmen R2 wechseln. Bearbeitet also ein Benutzer Parameter direkt, z.B. im Rahmen R1, werden die Bereiche der schrittweisen Konfigurierung (hier: Rahmen R2) automatisch aktualisiert, und der Status der Konsistenz-Prüfung des entsprechenden Bearbeitungsschrittes (hier: linker Teil des Rahmens R2) wirkt entsprechend aktualisiert. Im Unterschied zum bekannten "Wizard", bei dem die Bearbeitungsschritte lediglich durch "Vorwärts" und "Zurück"-Schaltflächen durchlaufen werden können, ist beim vorgeschlagenen Bedienkonzept keine festgelegte Reihenfolge einzuhalten, so dass ein Benutzer frei zwischen Bearbeitungsschritten navigieren kann. Dabei sind Parameter-Kategorien PK in einer vorteilhaften Variante identisch mit Bearbeitungsschritten im klassischen Sinn. Eine mit zumindest einem "inkonsistenten" Parameter versehene Kategorie wird entsprechend markiert, beispielsweise durch ein rotes Ausrufezeichen o.ä.. "Konsistente" Bearbeitungsschritte und damit Parameter-Kategorien, in denen kein einziger problematischer Parameter verzeichnet ist, werden mit einem "O.K."-Zeichen, beispielsweise einem grünen Häkchen, gekennzeichnet. Eine graue Darstellung eines solchen "O.K."-Zeichens kann bedeuten, dass die Parameter dieser Parameter-Kategorie und somit dieses Bearbeitungsschrittes von vornherein als "gültig" erkannt worden sind bzw. nur optional für einen Benutzer zu bearbeiten sind. Schließlich können im Rahmen R2 für jeden Funktionsblock FB und zu jedem beliebigen Parameter P "Online"-Hilfen in Form von Hilfetexten, Tool-Tipps, o.ä. vorgesehen sein. Vorteilhaft ist das Editiergerät derart ausgestaltet, dass eine Compilierung des bearbeiteten Projektes nur dann freigegeben ist, wenn keine inkonsistenten Parameter mehr vorhanden sind.

## Patentansprüche

1. Editiergerät zur Konfigurierung von Parametern (P) für Funktionsblöcke (FB) einer industriellen Automatisierungsanordnung,
wobei für eine Mehrzahl der Funktionsblöcke (FB) jeweils eine Mehrzahl Parameter konfigurierbar ist, und wobei zur Konfigurierung eine grafische Benutzeroberfläche (BO) vorgesehen ist,
**dadurch gekennzeichnet, dass**
ein erster Bereich der grafischen Benutzeroberfläche (BO) zur direkten Eingabe oder Änderung mehrerer oder aller Parameter eines ausgewählten der Funktionsblöcke (FB) vorgesehen ist,
dass ein zweiter Bereich der grafischen Benutzeroberfläche (BO) mit einer weiteren Darstellung der Parameter (P1) vorgesehen ist,
wobei zumindest ein Parameter oder eine Parameter-Kategorie (PK) aus dieser Darstellung auswählbar ist und wobei das Editiergerät zur einer den Benutzer führenden Konfiguration dieses zumindest eines Parameters oder der Parameter dieser Kategorie eingerichtet ist, dass das Editiergerät zur wahlfreien wechselweisen Verwendung des ersten und des zweiten Bereiches eingerichtet ist, und
dass das Editiergerät zur wiederholten Konsistenz-Prüfung der Parameter und zur zu kontinuierlichen Kennzeichnung von konsistenten und nicht-konsistenten der Parameter eingerichtet ist.

2. Editiergerät nach Patentanspruch 1,
**dadurch gekennzeichnet,**
**dass** beim Wechsel zwischen dem ersten und dem zweiten Rahmen jeweils eine Sicherung der bislang eingegebenen Parameter vorgenommen wird.

3. Editiergerät nach einem der vorhergehenden Patentansprüche,
**dadurch gekennzeichnet,**
**dass** für den ersten Bereich ein erster Rahmen (R1) und für den zweiten Bereich ein zweiter Rahmen (R2) der grafischen Benutzeroberfläche (BO) vorgesehen ist.

4. Editiergerät nach Patentanspruch 1,
**dadurch gekennzeichnet,**
**dass** in dem zweiten Bereich der Zugriff auf die Parameter anhand einer Baumstruktur erfolgt.

5. Editiergerät nach einem der vorhergehenden Patentansprüche,
**dadurch gekennzeichnet,**
**dass** das Editiergerät derart eingerichtet ist, dass bereits konfigurierte der Parameter eines Funktionsblocks (FB), der noch nicht vollständig oder nicht konsistent konfiguriert ist, beim Wechsel zu einem anderen der Funktionsblöcke (FB) jeweils gespeichert werden.

6. Editiergerät nach einem der vorhergehenden Patentansprüche,
**dadurch gekennzeichnet,**
**dass** die wiederholte Konsistenz-Prüfung zumindest nach jeder Eingabe oder nach einer Änderung eines der Parameter jeweils durchgeführt wird.

7. Editiergerät nach einem der vorhergehenden Patentansprüche,
**dadurch gekennzeichnet,**
**dass** das Editiergerät zumindest in dem zweiten Bereich zur separaten Darstellung von zwingend und von optional zu konfigurierenden Parametern (P) ausgestaltet ist.

8. Verfahren für ein Editiergerät zur Konfigurierung von Parametern (P) von Funktionsblöcken (FB) einer industriellen Automatisierungsanordnung,
**dadurch gekennzeichnet,**
**dass** mittels einer grafischen Benutzeroberfläche (BO) zumindest zwei Bereichen zur Konfigurierung der Parameter eines ausgewählten der Funktionsblöcke (FB) angezeigt werden, wobei
in einem ersten der Bereiche eine direkte Eingabemöglichkeit für eine Mehrzahl oder alle Parameter des ausgewählten der Funktionsblöcke (FB) angeboten wird, und in einem zweiten Bereich der grafischen Benutzeroberfläche (BO) eine einen Benutzer führende Eingabemöglichkeit für zumindest einen der Parameter angeboten wird,
wobei dem Benutzer ein wahlfreier Wechsel zwischen den beiden Bereiche angeboten wird, wobei zumindest nach jeder Konfiguration eines der Parameter eine Konsistenzüberprüfung der Parameter vorgenommen wird,
wobei inkonsistente Parameter **gekennzeichnet** werden.
